Europäisches Patentamt

(19) European Patent Office

Office européen des brevets

(11) Publication number: **0 052 479**
**A2**

(12) # EUROPEAN PATENT APPLICATION

(21) Application number: **81305360.0**

(22) Date of filing: **11.11.81**

(51) Int. Cl.³: **G 11 B 23/04**
**G 11 B 15/66**

(30) Priority: **17.11.80 JP 164299/80**
**17.11.80 JP 164300/80**
**24.06.81 JP 93303/81**

(43) Date of publication of application:
**26.05.82 Bulletin 82/21**

(84) Designated Contracting States:
**DE FR GB NL**

(71) Applicant: **Matsushita Electric Industrial Co., Ltd.**
**1006, Oaza Kadoma**
**Kadoma-shi Osaka-fu, 571(JP)**

(72) Inventor: **Sumisha, Hidemichi**
**25-3, Midocho**
**Kadoma-shi(JP)**

(72) Inventor: **Minamide, Seiko**
**6-9, Higashitomigaoka-1-chome**
**Nara-shi(JP)**

(72) Inventor: **Kikuya, Satoshi**
**11-104, Ikuno-4-chome**
**Katano-shi(JP)**

(74) Representative: **Connor, Terence Kevin et al,**
**FITZPATRICKS Kern House 61/62 Lincoln's Inn Fields**
**London WC2B 6EX(GB)**

(54) **Tape cassette.**

(57) Provided is a tape cassette accomodating therein a tape wound around and extending between two reels and having a lid swingably attached to the front side of the tape cassette, comprising a tape guard member, for protecting the tape stretched on the front side of the tape cassette from being touched by foreign matters, pivotally mounted to a housing of the tape cassette and adapted to oppose to the lid across the tape stretched, and further comprising a stretched tape regulating member disposed to the housing so as to have a small gap from the stretched tape.

FIG. 7

EP 0 052 479 A2

TAPE CASSETTE

BACKGROUND OF THE INVENTION

Field of the Invention

The present invention relates to a tape casette encasing a tape type recording medium for recording and reproducing video and voice information, for use in video tape recorders or the like.

Description of the Prior Art

In general, tape cassettes are required to have a function for protecting the tape therein from any damaging force. In addition, there is an increasing demand for reduction in size, weight and thickness of the tape cassettes, in compliance with the current requirement for reduction in size, weight and thickness of the video tape recorders.

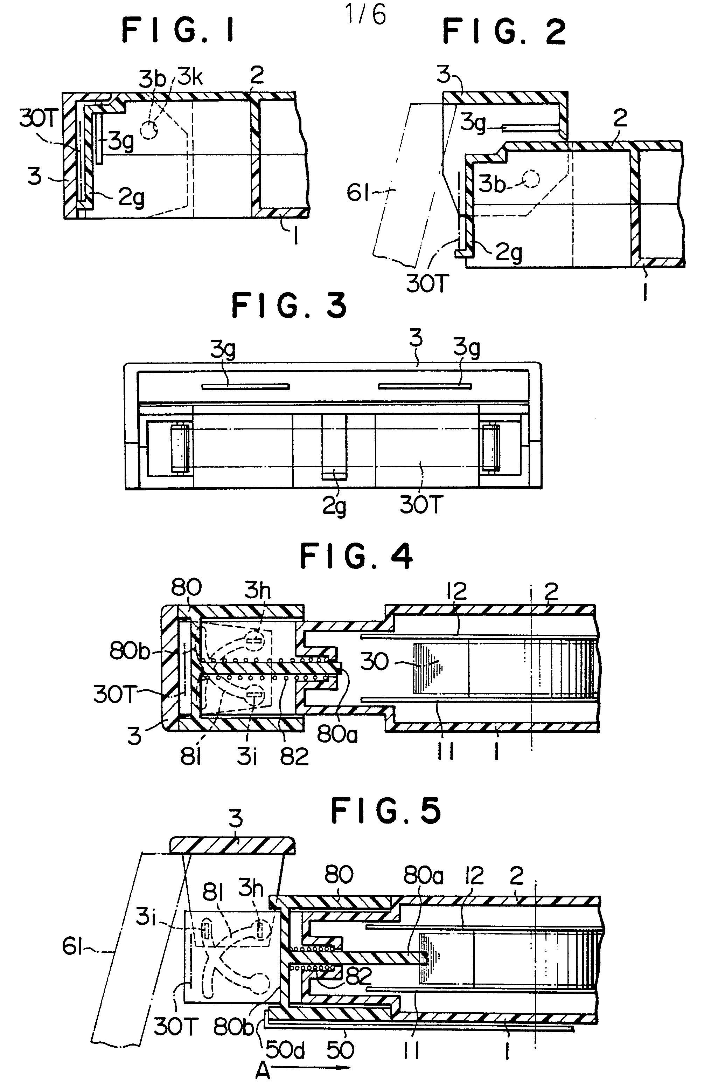

A typical example of the structure for protecting the tape in a tape casette, disclosed in Japanese Utility Model laid-open No. 71816/1973, will be explained hereinunder with specific reference to Figs. 1 to 3.

The body of the tape cassette is composed of a lower housing 1 and an upper housing 2. A tongue 2g is provided at the central portion of one side wall of the upper housing 2 adjacent to a lid 3. Holes 3k formed in both side walls of the upper housing 2 receive a pivot shaft 3b of the lid 3 so that the lid 3 is swingable around the axis of the pivot shaft 3b. The lid 3 has projections 3g which are positioned on both sides of the tongue 2g shown in Fig. 3 when the lid 3 takes a closing position. In this state, a stretched tape 30T takes a position between the lid 3 and the projections 3g or the tongue 2g. This structure regulates the position of the tape 30T while keeping the latter away from being contacted with the foreign matters such as dusts, operator's finger or the like. The arrangement is such that as the lid 3 is swung in the opening direction by means of a lid opening member 61, the projections 3g are swung, as one unit, with the lid 3 without comining in touch with the stretched tape 30T. This means that the inner surface of the stretched tape 30T can not be covered completely so that the tape 30T is liable to be damaged by a foreign matter which may enter into the tape cassette from an opening 1j of the latter.

If the tape 30T is slacked inwardly of the tape cassette while the lid 3 is swung in the closing direction, the projections 3g may contact with the tape 30T, causing the latter to be damaged. On the contrary, if the tape 30T is outwardly slacked while the cassette itself is loaded onto a video recording and reproducing device, it may damaged by posts, heads or the like whichd are mounted on the video recording and reproducing device in the vicinity of the cassette loaded thereon and which may come in contact with the tape 30T that is out of the position regulated by the tongue 2g.

To overcome these problems, Japanese Patent laid-open No. 151813/1979 proposes an improved construction in which, as shown in Figs. 4 and 5, the stretched tape is completely covered in all directions upon the loading on the video recording and reproducing device (which will be hereinunder denoted as "video tape recorder").

In this case, the tape cassette is composed of a lower housing 1 and an upper housing 2, and accomodates reels 11 around which a tape 30 is wound. Guide grooves 81 are formed in both side surfaces of each of the lower and upper housings 1 and 2. These guide grooves 81 receive pivot shafts 3h, 3i of the lid 3 so that the latter is rotatably held by the upper housing 2. A slide member 80 is biased toward the lid 3 by a spring 82 which is carried by a guide post 80a projecting at a right angle from a bridging member 80b disposed substantially at the central portion of the tape cassette.

As the tape cassette is mounted in the video tape recorder, the slide member 80 is retracted through an actuation by a bend 50d of a casette lifting device 50 of the video tape recorder and is moved in the direction of an arrow A overcoming the biasing force of the spring 82, as will be seen from Fig. 5. Then, as the tape cassette body is depressed, the lid 3 is swung to the position shown in Fig. 5, by a lid oening member 61 of the video tape recorder, around the axis of the pivot shaft 3h while the other pivot shaft 3j is guided by the guide groove 81. The demounting of the tape cassette can be made in the reverse procedure.

If the tape 30T is slacked outwardly when the tape cassette body is to be loaded in the video tape recorder, there may be a risk that the tape 30T may be contacted and damaged by posts, heads and other structures mounted on the video tape recorder and positioned outside of the tape cassette loaded and in the vicinity of the tape 30T which out of its regulated position.

In this tape cassette, the chance or possibility of contact between the tape 30T and foreign matters is decreased because the tape 30T is covered at its front side by the lid 3 and at its upper, lower and rear sides by the slide member 80. However, since the slide member 80 makes a sliding motion over a considerably large stroke, the front portions of the lower housing 1 and the upper housing 2 must have a thickness increase correspondingly to the thickness of the slide member 80. This goes uite contrary to the demand for reduction in size and thickness of the tape cassette. In addition, its weight is increased due to an increment in the number of parts.

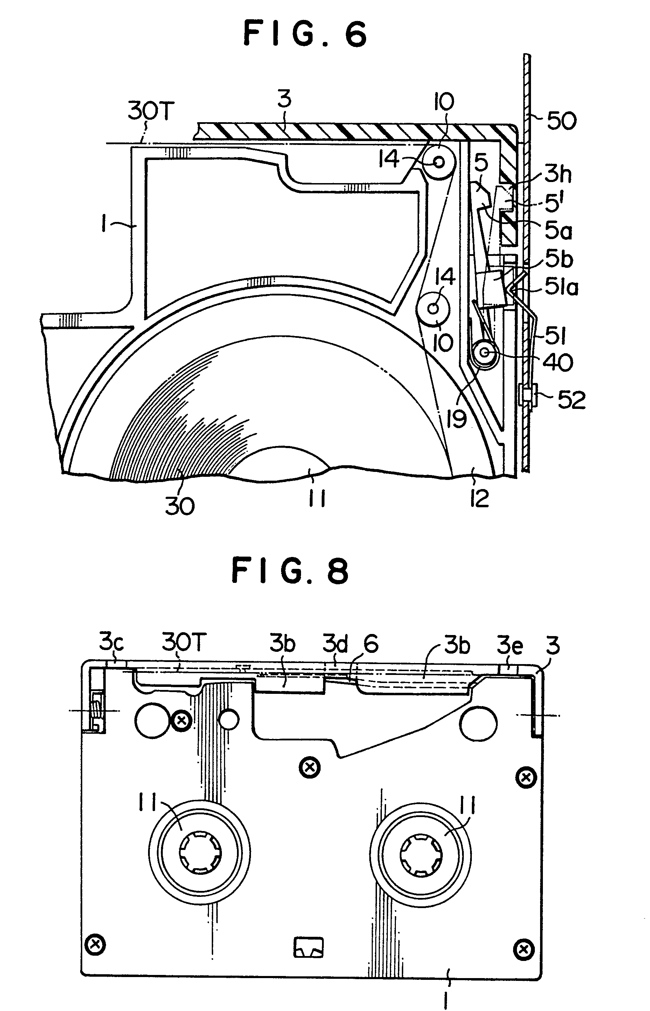

The tape cassette is required to have a locking mechanism for locking the lid. A typical conventional locking mechanism will be described with reference to Fig. 6 which shows a locking mechanism incorporated in the tape cassette explained in connection with Figs. 1 thru 3.

Although not shown, pivot shafts are attached to both laternal sides of the lid 3 to permit the latter to be swung pivotally between an opening position and closing position. The lid 3 is rediliently biased by a spring in the closing direction. A lid lock 5 is pivotally supported by a boss 40 projecting from the lower side of the housing 1, and is resiliently biased by a lid lock spring 19 to a position designated at a reference numeral 5'. The lid lock 5 has an engaging portion 5a adapted to be engaged with a recess 3h in the lid 3 thereby to lock the latter. As the tape cassette is mounted in a video tape recorder, a projection 5b of the lid lock 5 is presed by an engaging poriton 51a of a lid unlock spring 51 which is secured by a rivet 52 to the tape cassette lifting device 50. In consequence, the lid lock 5', which has locked the lid 3, is moved from the locking position 5' to the unlocking position thereby to release the lid 3. This locking mechanism, described only by way of example, have been modified in various manners. For instance, the unlocking operation is made by a projection formed on the tape cassette lifting device by means of either a pin or a bent portion.

Thus, in the prior art apparatus exemplified heretofore, the tape cassette is required to have a lid lock and a lid lock spring, while the tape cassette lifting device of the video tape recorder must have at least means for unlocking the lid. This complicated construction having a large number of parts does not satisfy the demand for reduction in size and weight of the tape cassette and hence, of the video tape recorder to which the tape cassette is loaded.

Typical examples of conventional tape cassettes for video tape recorders have been described. As stated before, in the field of the video tape recorders or the like apparatus, there is an increasing demand for reduction in size, weight and thickness, as well as for increase of recorded signal density and recording time length. This in turn gives a rise to a demand for reducing, tape, thickness, as well as for recorded signals in high density i.e. for extremely shotening wavelengths of recorded signals. In such a tape, various troubles such as drop out, reduction in S/N ratio, reduction in output power and so forth are caused even by a slight damage of the tape due to dusts, contaminants, fingerspring and so forth. The damage of the tape also causes a fluctuation of the load on the tape running system, resulting in an unsmooth running of the tape.

From this point of view, the protection of the tape against any damage, as well as the reduction in size, weight and thickness of the video tape recorder and, hence, of the tape cassette, are recently becoming more significant.

SUMMARY OF THE INVENTION

Object of the Invention

Accordingly, an object of the invention is to provide a tape cassette capable of perfectly protecting the tape accomodated therein and having a reduced size, weight and thickness.

Brief Summary of the Invention

To this end, according to the invention, there is provided a tape cassette comprising: a housing accomodating reels around which a tape is wound, and provided in its front side with an opening for receiving a tape extracting member of a device in which said tape cassette is loaded; a plurality of tape guide members disposed in front of said housing and on both sides of the opening, for stretching the tape; a lid attached to the front side of the housing, movable between an opening and closing positions, and adapted to cover the tape from the outer side of the latter; and means for protecting the stretched tape, disposed to oppose to the lid across the stretched tape, thereby the tape is protected from foreign matters which may come into the tape cassette through the opening.

According to one aspect of the invention, the tape protecting means are constituted by a tape guard piece rotatably carried by the housing and a shield member integrally attached to the housing. The lid is provided with an engaging piece adapted for engaging the tape guard piece, the engagement between the engaging piece and the tape guard piece is controlled in accordance with the rotation of the latter. In consequence, the lock mechanism for locking the lid is simplified to permit reduction in size and weight of the tape cassette.

BRIEF DESCRIPTION OF THE DRAWINGS

Fig. 1 is a sectional view of an essential part of a conventional tape cassette, with its lid thereof being in the closing position;

Fig. 2 is a sectional view of an essential part of the conventional tape cassette shown in Fig. 1, in the state loaded in a video tape recorder or the like device;

Fig. 3 is a front elevational view of the conventional tape cassette shown in Fig. 1, with the lid thereof being in the opening position,

Fig. 4 is a sectional view of an essential part of another conventional tape cassette with its lid thereof being in the closing position;

Fig. 5 is a sectional view of an essential part of the tape cassette shown in Fig. 4, in the state loaded in a video tape recorder or the like device;

Fig. 6 is a sectional view of an essential part of a lid lock mechanism incorporated in the tape cassette shown in Fig. 1;

Fig. 7 is an exploded perspective view of a tape cassette constructed in accordance with an embodiment of the invention;

Fig. 8 is a back side elevational view of the tape cassette of the invention;

Fig. 9 is a perspective view of the tape cassette of the invention during insertion into a tape cassette lifting device;

Figs. 10, 11 and 12 are sesctional views taken along the line B-B' of Fig. 8;

Fig. 13 is a plan view of the tape cassette of the invention in the state mounted in a video tape recorder or the like device;

Figs. 14, 15 and 16 are sectional views taken along the line C-C' of Fig. 13; and

Figs. 17, 18 and 19 are sectional views of essential parts of different examdples of tape position regulating member of tape cassette in accordance with the invention.


DESCRIPTION OF THE PREFERRED EMBODIMENTS

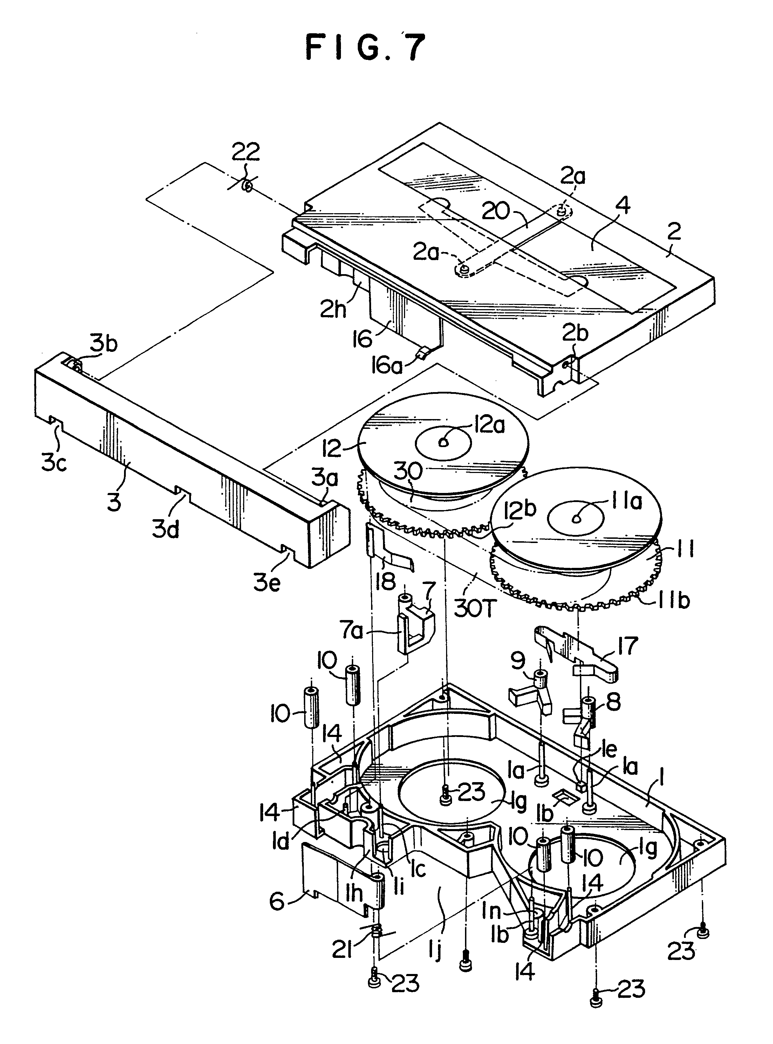

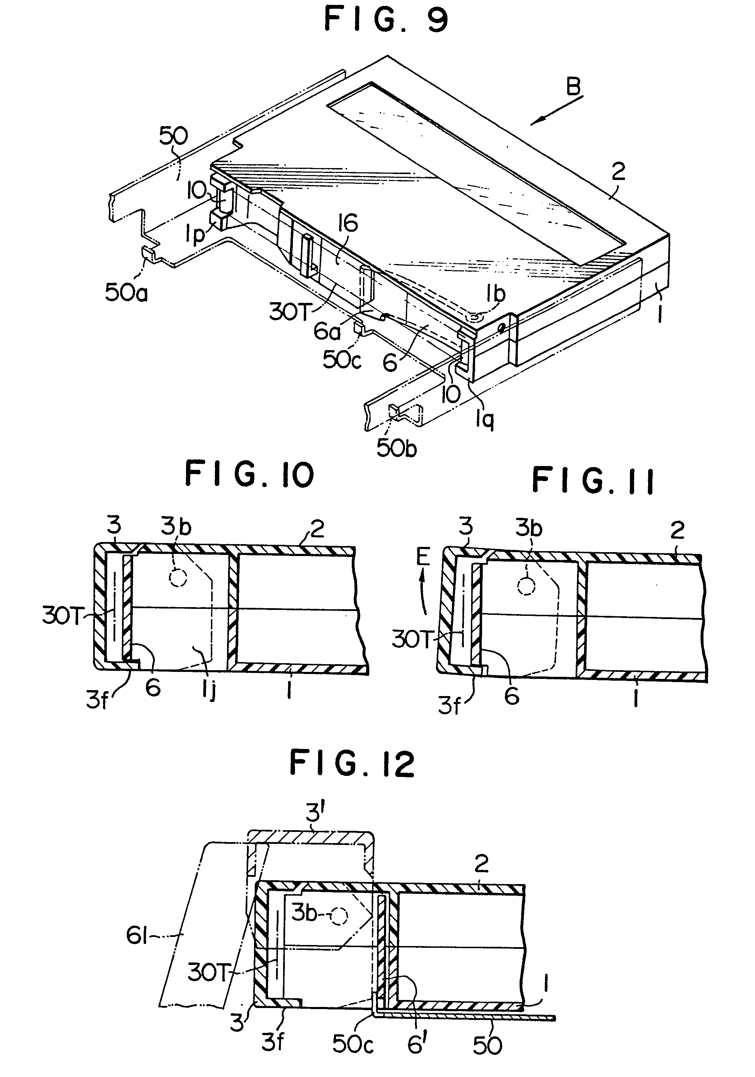

A basic construction of a tape cassette of the invention will be described hereinunder with specific reference to Figs. 7 and 8 whichd are an exploded perspective view and a back side elevational view, respectively, of a tape cassette constructed in accordance with a preferred embodiment of the invention.

The body of the tape cassette is composed of a lower housing 1 and an upper housing 2 which are assembled together by means of screws 23. A transparent tape window 4 is formed in the top panel of the upper housing substantially in the middle of the latter. It is possible to know the amount of turns of tape remaing on respective reels, through this window 4. A reel pressing spring 20 is secured to the inner side surface of the top panel of the upper housing 2 through small projections 2a projected from and fitted to, for example by melding, the top panel. A pay-off reel 11 and a take-up reel 12, by which a magnetic tape 30 is wound and stretched, are accomodated in the space defined between the lower housing 1 and the upper housing 2. Projections 11a, 12a are formed on the top surfaces of the central shafts of the pay-off reel 11 and the take-up reel 12 respectively. These projections 11a, 12a are rersiliently contacted by the reel pressing spring 20, so that the pay-off reel 11 and the take-up reel 12 are resiliently biased downwardly. A plurality of tape guide posts 14 are planted on the lower housing 1. Each page guide post 14 rotatably carries a tape guide roller 10. The magnetic tape 30 adapted to be stretched along these tape guide rollers 10. The portion of the tape 30 extended and stretched between two tape gude rollers 10 disposed at the front side of the lower housing 1 will be referred to as "stretched tape" and will be designated at a reference numeral 30T, hereinunder. The pay-off reel 11 and the take-up reel 12 are provided with lower flanges having peripheral teeth 11b, 12b. These reels 11b, 12b are adapted to engage reel locks 8, 9 to permit the reels 11, 12 to rotate only in the direction for taking up the magnetic tape 30. the reel locks 8, 9 are rotatably supported by means of shafts 1a planted on the lower housing 1 and are resiliently biased so as to swing away from each other, thereby come into engagement with the respective peripheral teeth 11b, 12b, by the resilient force of a reel lock spring 17 which is located by a projection 1e formed on the lower housing 1. A shield member 16 is jointed to the front side of the upper housing 2. A page guard piece 6 is rotatably fitted around a post 1b planted on the lower houisng 1, and is resiliently biased so as to come into contact with the inner surface of the shield member 16 by means of a spring 21 thereby to prevent the stretched tape 30T from being contacted by foreign matters which may enter into the tape cassette through an opening 1j formed in the lower housing 1, thereby the tape can be protected.

A tape position regulating member 7 is rotatably held by a post 1c planted on the lower housing 1, and is contacted by the free end of a tape position regulating spring 18 which is fixed to a post 1d, so as to be resiliently biased counter-clockwisely around the post 1c. the tape position regulating member 7 has a tape position regulating tab 7a projectable from a small aperture formed in the lower housing 1. The stretched tape 30T is positioned through small gaps defined between the tape position regulating tab 7a and the front walls 1h, 2h of the lower and upper housing 1, 2 so that the slacking of the stretched tape 30T is effectively suppressed to permit only a small amount of slack. The pay-off reel 11 and the take-up reel 12 are adapted to engage, through openings 1g formed in the lower housing 1, with reel beds (not shown) mounted on the video tape recorder or the like apparatus in which the tape cassette is loaded. The lower housing 1 is further provided with a hole 1f for releasing the feel locks, hole 1i for releasing the tape from the regulated position, and a hole 1n for locating the tape cassette when the latter is loaded on the video tape recorder or the like apparatus.

A rotary shaft 3a provided on one end of the lid 3 engages a hole 2b formed in the upper housing 2, while another rotary shaft 3b provided on the other end is in engagement with a hole (not shown) which is formed in the upper housing 2 in symmetry with the hole 2b, intervened with a lid spring 22 which is adapted to bias the lid 3 resiliently in the closing direction. The lid 3 has an engaging tab 3f projected toward the opening 1j.

According to the arrangement described heretofore, in the state before loading the tape cassette in the video tape recorder or the like, the stretched tape 30T is completely covered in all directions by the front walls 1h, 2h of the lower and upper housings 1, 2, the lid 3, the engaging tab 3f projected from the lid 3, the page guard piece 6 rotatably carried by the lower housing 1 and the shield member 16 provided on the upper housing 2, and is perfectly kept away from contact with foreign matters such as dusts, operator's fingers and so forth.

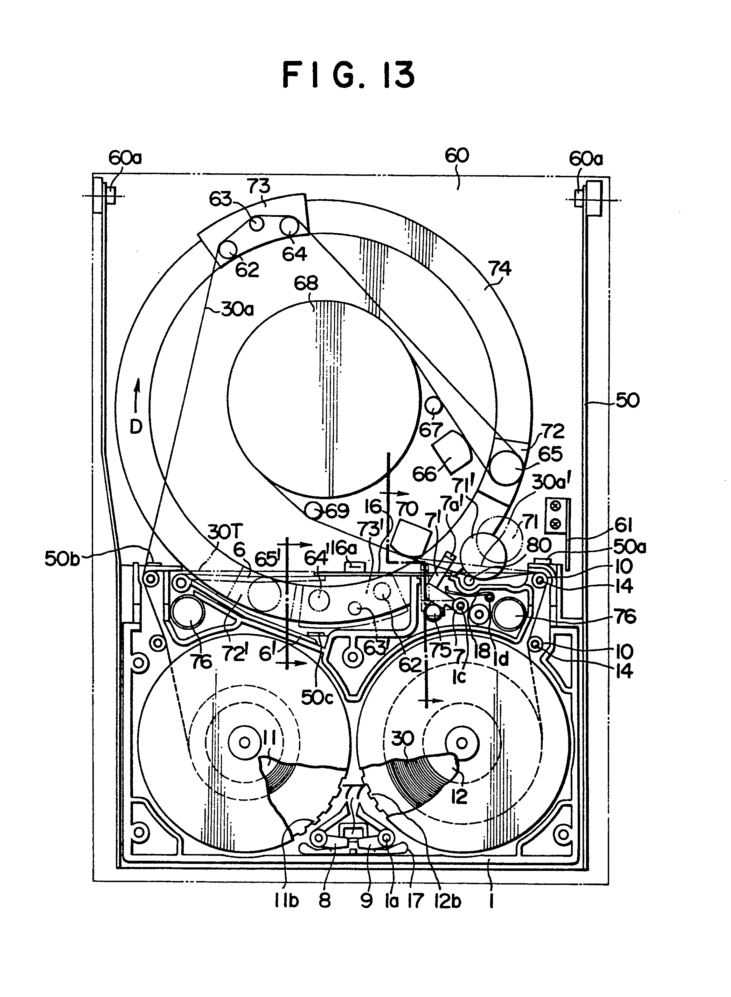

Enplanation is made to loading operation of the tape cassette having the described construction, on the video tape recorder or the like with reference to Figs. 9 and 13. In Fig. 9, the tape cassette is shown with its lid 3 omitted, while Fig. 13 lacks the lower housing 1 and the lid 3 for the simplification of illustration.

As the tape cassette is inserted into a tape cassette lifting device 50 of the video tape recorder, as indicated by an arrow B, the abuting portions 1p, 1g provided on the front wall of the tape cassette in both end portions of the front wall are brought into contact with the locating portions 50a, 50b of the tape cassette lifting device 50, so that the tape cassette is located by the device 50. In consequence of the insertion of the tape cassette, the bend 50c of the tape cassette lifting device 50 comes into contact with the lower end 6a of the tape guard piece 6 so as to swing the latter from the position indicated by the reference numeral 6 to a position indicated by a numeral 6' around the post 1f, as shown in Fig. 13. Then, as the tape cassette lifting device 50 is depressesd, the latter is swung around a flucrum constituted by support shafts 60a fixed to the base plate 60 of the video tape recorder or the like, so that the tape cassette locating hole 1n is fitted onto a locating member 76 projected from the base plate 60, so that the tape cassette is located both in lateral directions and front and rear directions.

The opening 1j defined by the inner surfaces of the tape guard piece 6' and the shield member 16 receive a loading main post 65' and loading sub-posts 62', 63' and 64'. A main board 72' on which the loading main post 65' is planted and a sub-board 73' on which the loading sub-posts 62', 63' and 64' are planted are

rotated in the direction of an arrow D by means of a loading ring 74, so that the loading main post 65' is moved to a position designated at a numeral 65, while the loading sub-posts 62', 63', 64' are moved to positons indicated by numerals 62, 63, 64, respectively, thereby the stretched tape 30T forms a tape path 30a. A reference numeral 66 designates an erase head, while numerals 67 and 69 designate limitter posts. A cylinder and an audio control head are denoted by reference numeral 68 and 70, respectively. Numerals 80 and 71, 71' indicate, respectively, a capstan and pinch rollers.

The relationship between the lid 3 and the tape guard piece 6 in the course of the loading of the tape cassette on the tape cassette lifting device 50 will be explained hereinunder with reference to Figs. 10, 11 and 12.

Referring to Fig. 10 showing the tape cassette which is in the state prior to the mounting on the tape cassette lifting device 50, the stretched tape 30T is completely covered by, in combination, the lid 3, the engaging tab 3f, the tape guard piece 6 and other members from all directions. Therefore, even if foreign matters, such as a finger are entered through the opening 1j of the lower housing 1, such foreign matters cannot reach the stretched tape 30T.

Fig. 11 shows the state in which the lid 3 is forcibly pulled upwardly. although the lid 3 tends to rotate around the axis of the rotary shaft 3b but is prevented from rotating by the engaging tab 3f which abuts the lower end of the tape guard piece 6. fig. 12 shows the tape cassette in the state mounted in the tape cassette lifting device 50. As the tape cassette is inserted into the tape cassette lifting device 50, the tape guard piece 6 is moved to the position designated at 6' by the bend 50c of the tape cassette lifting device 50, so that the lid 3 is disengaged from the engaging tab 3f. As the tape cassette lifting device 50 is further depressed, the lid 3 is swung to the position indicated by numeral 3' through action of the lid opening member 61 secured to the base plate or another stationary part. Needless to say, the engaging tab 3f is so sized as not to contact the stretched tape 30T in the course of the swinging operation of the lid 3, and the lid opening member 61 is so located as not to interfere with the stretched tape 30T when the latter is pulled out through action of the loading post and so forth.

As the tape cassette is unloaded from the tape cassette lifting device 50, the tape guard piece 6' is returned to the position indicated by 6 through the bias force of the spring 21 and, at the same time, the lid is returned by the force of the spring 22 from the position denoted by 3' to the position denoted by 3 and is locked again by the tape guard piece 6.

According to the arrangement described heretofore, the engaging tab 3f projected from the lid 3 comes into engagement with the tape guard piece 6 rotatably mounted on the lower housing 1 thereby to be possible to control the swinging operation of the lid 3 in accordance with the swinging operation of the tape guard piece 6. The tape cassette of the invention, therefore, does not necessitate any lid lock nor the parts required in the conventional tape cassettes for locking the lid. Accordingly, the construciton of the tape cassette is simplified and the size and weight of the same are reduced advantageously.

The operation of the reel locks 8 and 9 will be explained hereinunder with specific reference to Fig. 13.

As stated before, the reel locks 8, 9 are resiliently biased to come into engagement with the peripheral teeth 11b, 12b formed in the lower flanges of the pay-off and take-up reels 11, 12, so that the pay-off reel 11 and the take-up reel 12 are rotatable only in the directions for taking up the tape 30. As the tape cassette is loaded on the video tape recorder or the like apparatus, a reel lock release pin 77 attached to the base plate 60 comes to enter through the reel lock release hole if thereby to pivot the reel rocks 8, 9 around the post 1a through engagement with the ends of the reel locks 8, 9 around the post 1a, causing the

reels to be released from the locking state.

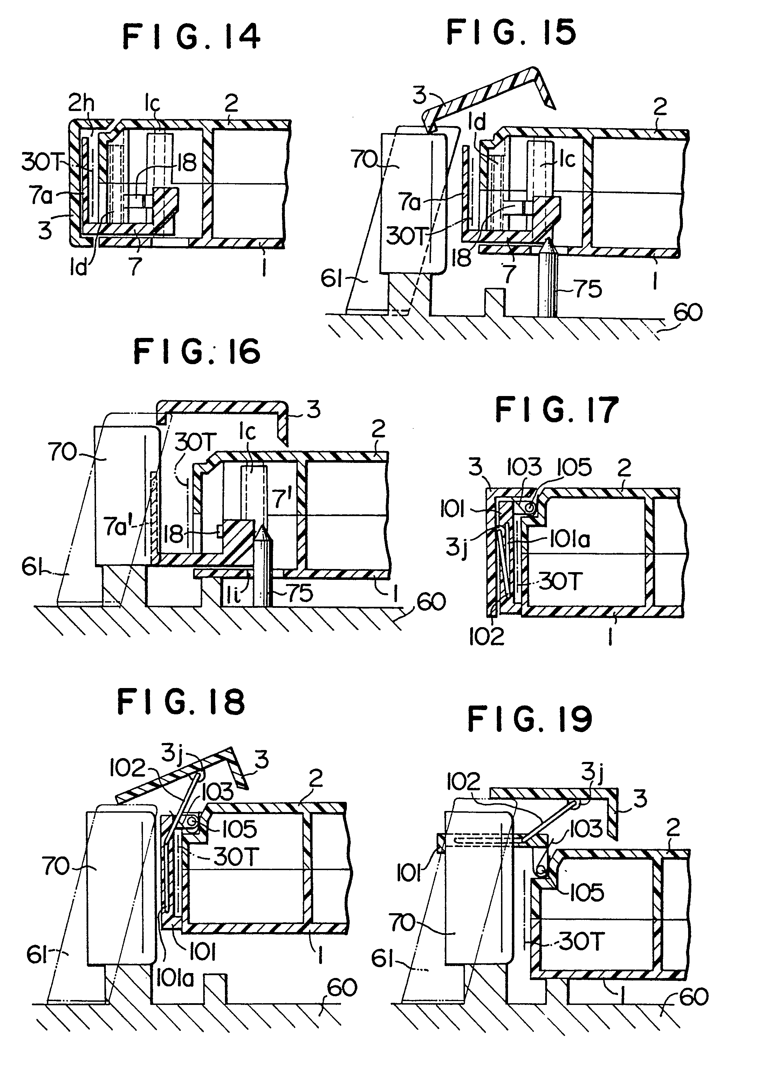

The operation of the tape position regulating member 7 will be described with reference to Figs. 14 15 and 16 which are sectional vies taken along the line C-C' of Fig. 13. Fig. 14 shows the tape position regulating member 7 in the state prior to the loading of the tape cassette in the video tape recorder or the like apparatus. The tape position regulating member 7 is pivotally held by the post lc projected from the lower housing 1, and is biased counter-clockwisely by the position regulating spring 18 which is fixed to the post ld projected from the lower housing 1. The tape position regulating member 7 is held in contact with a predetermined poriton of the lower housing 1 by the force of the position regulating spring 18 and as a tape position regulating portion 7a cooperating with the front wall 2h of the upper housing 2 so as to define therebetween a small gap through which the stretched tape 30T is confined.

Referring now to Fig. 15 showing the state on the way of the loading of the tape cassette in the video tape recorder or the like the lid 3 is held in substantially opened state by the lid opening member 61 of the video tape recorder or the like apparatus. A release pin 75 for releasing the tape from its regulated posi- tion, provided on the base plate 60 is held out of contact with the tape position regulating member 7.

Therefore, as in the state prior to the loading of the tape cassette, the stretched tape 30T is held between the tape position regulating member 7a and the front wall 2h of the upper housing 2 with a small gap left therebetween.

Fig. 16 shows the state after the loading of the tape cassette on the video tape recorder or the like apparatus has been completed. In this state, the lid 3 has been opened completely by the lid opening member 61. The tape position regulating member 7 has been swung in the clockwise direction around the post 1c by the release pin 75 entering through the tape regulated position release hole 1i so as to release the stretched tape 30T from the regulated position. As will be seen from Fig. 13, the tape position regulating member 7 is disposed when the tape cassette is loaded in the vicinity of the audio control head 70 in such a position as not to be interfered by any components mounted on the video tape recorder when it is rotated in the course of the mounting of the tape cassette.

As will be understood from the foregoing description, in the tape cassette of this embodiment, the tape position regulating member 7a opposes to the stretched tape 30a with a small gap left therebetween so as to prevent the stretched tape from deflecting toward the outside until the tape cassette is correctly loaded in the video tape recorder or the like apparatus. It is, therefore, possible to safely load the tape cassette without causing any damage of the tape, even when there is a slight slack in the tape prior to the loading of the tape cassette. Namely, according to the invention, it is possible to load the tape cassette in the right position on the video tape recorder or the like device, while completely avoiding the damaging of the tape due to incidentally come into contact with the components arranged in the vicinity of the stretched tape 30T such as the audio control head 70.

Since the position of the stretched tape 30T is regulated as stated before, it is possible to design the tape cassette such that the components such as the audio control head are located sufficiently close to the stretched tape 30T. This in turn permits the size of the video tape recorder or the like to be reduced advantageously.

As will be understood from the foregoing description, according to the invention, it is possible to protect the stretched tape against damages due to contact with dust, operator's finger and other foreign matters, as well as from the damages which may, for otherside be caused due to contact with components near the stretched tape during insertion of the tape cassette in the video tape recorder or the like apparatus. This in turn eliminates various troubles such as the drop out, reduction in S/N ratio, reduction in the output power and so forth, while ensuring the stabel running of the tape to increase recorded signal density and recording quality in VTR systems or the like with tapes of reduced thicknesses.

Construction and operation of another example of the tape position regulating member 7 will be described hereinunder with reference to Figs. 17, 18 and 19.

Referring first to Fig. 17 showing the state prior to the mounting of the tape cassette on the video tape recorder or the like, the stretched tape 30T extends with a small gap from the tape position regulating member 101 having a slide groove 101a. The lid 3 has a supporting poriton 3j to which connected is an arm 102 slidable along the slide groove 101a. Thus, the lid 3 is slidable as a result of the slidable engagement between the slide groove 101a and the arm 102 and is also swingable through the engagement between the portion 3j and the arm 102. The tape position regulating member 101 is swingably held at its one end by a support shaft 105 provided on the housing 2, and is resiliently biased toward the stretched tape 30T by means of a spring 103.

Referring now to Fig. 18 showing the state on the way of the loading of the tape cassette on the video tape recorder or the like apparatus, the lid 3 is in the state substantially opened by the lid opening member 61.

The arm 102 is sliding along the slide groove 101a of the tape position regulating member 101. Since the tape position regulating member 101 is resiliently biased by the spring 103, it remains opposed to the stretched tape 30T with a small gap left therebetween, thereby to regulate the position of the stretched tape 30T.

Fig. 19 illustrates the tape position regulating member 101 in the state after the loading of the tape cassette on the video tape recorder or the like apparatus has been completed. In this state, the lid 3 has been opened perfectly through action of the lid opening member 61. The tape position regulating member 101 has been pulled up by the arm 102 overcoming the bais force of the spring 103 and swung around the axis of the support shaft 105 on the housing 2, thereby to release the stretched tape 30T from the regulated position.

As will be understood from the foregoing descrition, the tape position regulating member 101 regulates the position of the stretched tape 30T until the stretched tape 30T is loaded into the right place thereby to protect the stretched tape 30T. The tape s released from the regulated position through swinging operation of the lid 3 which takes place immediately before the tape cassette has been loaded in the predetermined portion of the cideo tape recorder or the like apparatus.

The tape position regulating member 101 which operates as above-mentioned effectively prevents the stretched tape from extending outwardly from the tape cassette when the tape cassette lifting device is lowered, carrying the tape cassette with the tape outwardly slacking. Since the position of the stretched tape is regulated without fail, it is possible to arrange the components such as the audio control head in the positions sufficiently close to the stretched tape 30T of the tape cassette loaded to permit the reduction in size of the video tape recorder or the like apparatus as in the case of the embodiment described before. According to this embodiment, the release pin for releasing the tape from its regulated position can be eliminated from the video tape recorder or the like apparatus so as to permit a further reduction in size and weight of the apparatus.

## CLAIMS

1.      A tape cassette comprising:  a housing accomodating reels around which a tape is wound and between
which said tape is extended, said housing having on a
front side of said tape cassette an opening for
receiving a tape extracting members attached to an
apparatus on which said tape cassette is to be loaded; a
plurality of tape guide members disposed at both side
poritons of the front side of said housing and adapted
to stretch said tape; a lid secured to the front side of
said housing so as to be movable between an opening
position and a closing position, said lid being capable
of covering the stretched tape from the outer side of
the latter; and protecting means disposed so as to
oppose to said lid across said stretched tape, thereby
to protect said stretched tape from foreign matters
which may come into said tape cassette through said
opening.

2.      A tape cassette as claimed in claim 1, wherein
said protecting means includes a shield member and a
tape guard member.

3.      A tape cassette as claimed in claim 2, wherein
said tape guard member is pivotally secured to said
housing and is adapted to cover said stretched tape from
the inner side of the latter with a small gap left
therebetween

4.      A tape cassette as claimed in either one of claims 2 and 3, wherein one end of said tape guard member is resiliently biased to come into contact with said housing or said shield member.

5. A tape cassette as claimed in claim 2, wherein said lid is provided in a portion thereof with an engaging tab engageable with said tape guard piece, said tape guide piece being adapted to engage said engaging tab of said lid in the state prior to the loading of said tape cassette on said apparatus, while, as said tape cassette is loaded on said apparatus, said tape guard piece is swung by engagement releas means mounted on said apparatus so as to be out of engagement with said engaging tab of said lid.

6. A tape cassette as claimed in claim 1, characterized by further comprising tape position regulating means disposed so as to oppose to said stretched tape with a small gap left therebetween and adapted to regulate the position of said stretched tape.

7. A tape cassette as claimed in claim 6, wherein said tape position regulating means is adapted to regulate said stratched tape in its regulated position during the loading of said cassette tape onto said apparatus on which said tape cassette is loaded, and also arranged to be moved to a position where said stretched tape is released from the regulated position, after the loading operation of said tape cassette has been completed.

8.      A tape cassette as claimed in claim 7, wherein the movement of said tape position regulating means is effected by a projecting member projecting form said apparatus on which said tape cassette is to be loaded.

9.      A tape cassette as claimed in claim 7, wherein the movement of said tape position regulating means is effected in relation to the opening and closing movement of said lid attached to the front side of said housing.

FIG. 1

FIG. 2

FIG. 3

FIG. 4

FIG. 5

# F I G. 6

30T  3  10  50

14  5  3h  5'  5a  5b  51a

1  14  51  40  52

10  19

30  11  12

# F I G. 8

3c  30T  3b  3d  6  3b  3e  3

11  11

1

**FIG. 7**

# FIG. 9

# FIG. 10

# FIG. 11

# FIG. 12

FIG. 13

**F I G. 14**

**F I G. 15**

**F I G. 16**

**F I G. 17**

**F I G. 18**

**F I G. 19**